# EUROPÄISCHE PATENTSCHRIFT

(11) **EP 1 898 073 B1**
(45) Veröffentlichungstag und Bekanntmachung des Hinweises auf die Patenterteilung: **08.05.2013**
(21) Anmeldenummer: 07112560.3
(22) Anmeldetag: 16.07.2007
(51) Int. Cl.: F02C 7/36, F02C 3/107, F02C 3/113, F02C 7/32

(54) **Anordnung zur Energieentnahme bei einem Zwei-Wellen-Triebwerk**
Assembly for power take-off in a two-spool turbine engine.
Dispositif de prise de puissance dans un turboréacteur double corps.

(30) Priorität: 24.08.2006 DE 102006039608
(43) Veröffentlichungstag der Anmeldung: 12.03.2008
(73) Patentinhaber: Rolls-Royce Deutschland Ltd & Co KG, 15827 Blankenfelde-Mahlow (DE)
(72) Erfinder: Venter, Gideon Daniel, 14165 Berlin (DE)
(74) Vertreter: Gross, Felix

(56) Entgegenhaltungen:
- EP-A1- 1 270 903
- EP-A1- 1 541 834
- DE-A1- 3 602 543
- US-A- 3 514 945
- US-A- 4 776 163

## Beschreibung

Die Erfindung betrifft eine Anordnung zur Energieentnahme für ein Zwei-Wellen-Triebwerk mit einer Niederdruckwelle, einer über ein Zubehörgetriebe mit einem Generator verbundenen Hochdruckwelle, einem zwischen der Hochdruckwelle und dem Zubehörgetriebe angeordneten Hochdruckwellengetriebe und einem an die Niederdruckwelle angeschlossenen Niederdruckwellengetriebe.

Die Versorgung eines mit Zwei-wellen-Triebwerken ausgerüsteten Flugzeugs mit elektrischer Energie erfolgt bekanntermaßen mittels eines über ein Getriebe an die Hochdruckwelle des Triebwerks angeschlossenen Generators, der auch als Starter zum Anlassen des Triebwerks genutzt wird. An diesem Zubehörgetriebe sind weitere Vorrichtungen wie Kraftstoff- und Ölpumpen oder dgl. vorgesehen. Bis zu einem bestimmten Betrag der Leistungsentnahme hat sich dieses Prinzip auch bewährt, genügt aber nicht dem ständig steigenden Leistungsbedarf von Flugzeugen, deren Systeme in vermehrtem Umfang auf elektrischen Betrieb umgestellt werden, da aufgrund der verringerten Drehzahl der Hochdruckwelle in bestimmten Betriebsphasen, zum Beispiel in der Landephase und im Stand, einerseits die erforderliche Energie nicht erzeugt werden kann und andererseits ein - normalerweise nicht erforderliches - Hochfahren der Hochdruckwelle in dieser Phase einen deutlich erhöhten Kraftstoffverbrauch zur Folge hat. Die Nutzung der selbst im Leerlauf über hohe Leistungsreserven verfügenden Niederdruckwelle des Triebwerks zur Energieerzeugung bereitet insofern Schwierigkeiten, als diese eine deutlich niedrigere Drehzahl als die Hochdruckwelle hat und zudem in einem großen Drehzahlbereich betrieben wird, so dass für die Leistungsübertragung auf einen Generator die Anordnung mehrerer zuschaltbarer Getriebe erforderlich ist, die jedoch konstruktiv und schaltungsseitig aufwendig sind, das Gewicht des Triebwerks erhöhen und wegen der mehrfachen Schaltung auch nicht zuverlässig funktionieren. Der Nutzung der Niederdruckwelle zur Energiegewinnung mittels eines an diese angeschlossenen Generators steht zudem entgegen, dass dieser nicht gleichzeitig zum Starten des Triebwerks eingesetzt werden kann.

Aus der EP 1 541 834 A1 ist ein Zwei-Wellen-Triebwerk mit einem Ausgleichsplanetengetriebe zum Betrieb von Zusatzaggregaten bekannt, das von der Hochdruck- und der Niederdruckwelle des Zwei-Wellen-Triebwerks über Zwischenwellen mit einem Hochdruckwellengetriebe und einem Niederdruckwellengetriebe unter Verwendung von Kegelrädern angetrieben wird.

Der Erfindung liegt die Aufgabe zugrunde, eine Anordnung zur Energieentnahme für ein Zwei-wellen-Triebwerk eo auszubilden, dass auch in bestimmten Betriebszuständen mit einem niedrigen Drehzahlbereich der Hochdruckwelle bei niedrigem Kraftstoffverbrauch eine hohe Energieentnahme vom Generator und Betrieb von Pumpen und hydraulischen Systemen gewährleistet ist.

Erfindungsgemäß wird die Aufgabe dadurch gelöst, dass das zur Energieübertragung auf das Hochdruckwellengetriebe vorgesehene Niederdruckwellengetriebe über eine in bestimmten Betriebsphasen mit verminderter Hochdruckwellendrehzahl zuschaltbare Kupplung und ein zur Geschwindigkeitsanpassung und Einstellung der Kraftübertragung zwischen Hoch- und Niederdruckwellengetriebe ausgebildetes Kegelscheibenumschlingungsgetriebe sowie eine Freilaufkupplung mit dem Hochdruckwellengetriebe verbunden ist. Zweckmäßige Weiterbildungen der Erfindung sind Gegenstand der Unteransprüche.

Der Grundgedanke der Erfindung besteht in der zusätzlichen Nutzung der Energie der Niederdruckwelle, wenn die Hochdruckwelle in bestimmten Betriebszuständen mit zu geringer Drehzahl oder bei einem Triebwerksausfall gar nicht mehr dreht. Ein mit der Niederdruckwelle verbundenes Getriebe zur Erhöhung der Drehzahl und ein mit der Hochdruckwelle verbundenes Getriebe Verminderung der Ausgangsdrehzahl sind über ein Kegelscheibenumschlingungsgetriebe und eine Freilaufkupplung, und zwar bei zu geringer Drehzahl oder Triebwerksausfall zuschaltbar über eine schaltbare Kupplung, miteinander verbunden. Die Freilaufkupplung ist so ausgebildet, dass Energie nicht vom Hochdrucksystem auf das Niederdrucksystem übertragen werden kann. Das aufgrund eines gemessenen Drehmoments oder einer Drehzahlmessung der beiden Wellen einstellbare Kegelscheibenumschlingungsgetriebe sorgt für einen Drehzahlausgleich zwischen den beiden mit unterschiedlicher - und zudem in Bezug auf die Niederdruckwelle noch wechselnder - Drehzahl rotierenden Wellen, so dass die Energie der Niederdruckwelle auf das mit der Hochdruckwelle verbundene Getriebe übertragen werden kann. Auf das mit dem Hochdruckwellengetriebe verbundene Zubehörgetriebe kann somit durch Nutzung der Energie der Niederdruckwelle bei gleichzeitiger Kraftstoffeinsparung eine ausreichend hohe Energie zum Betreiben eines Generators zur Stromerzeugung und weiterem Zubehör.

Im Falle der Nutzung der Energie der Niederdruckwelle durch Windmilling bei einem Triebwerksausfall trennt eine weitere schaltbare Kupplung das Hochdruckwellengetriebe von der Hochdruckwelle, die in diesem Fall nicht mit angetrieben wird. Dadurch kann das Zubehörgetriebe zur Gewährleistung des Generator- und Pumpenbetriebs mit höherer Geschwindigkeit angetrieben werden.

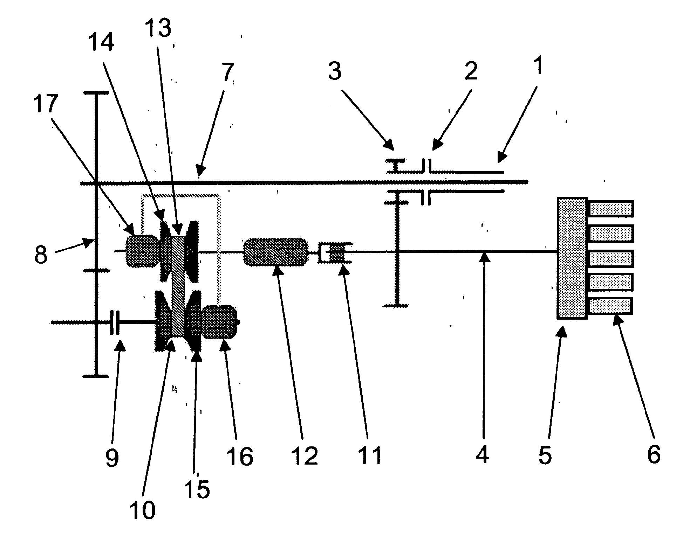

Ein Ausführungsbeispiel der Erfindung wird anhand der Zeichnung näher erläutert. In der einzigen Figur ist eine Anordnung für ein Zweiwellen-Triebwerk zur wahlweisen Ankopplung der Niederdruckwelle an ein mit der Hochdruckwelle verbundenes Zubehörgetriebe, an das ein Generator und weiteres Zubehör für den Triebwerksbetrieb angeschlossen sind, schematisch dargestellt.

Wie die Zeichnung zeigt, ist die Hochdruckwelle 1 über eine erste schaltbare Kupplung 2, ein Hochdruckwellengetriebe 3 und eine Radialwelle 4 mit einem Zubehörgetriebe 5 verbunden, an das verschiedenes Zubehör oder Zusatzgeräte 6, nämlich ein Generator zur Erzeugung und Bereitstellung elektrischer Energie für das Flugzeug sowie Hydraulikpumpen, Ölpumpen, Kraftstoffpumpen und dergleichen, angeschlossen sind. Im normalen Flugbetrieb kann so mit einem von der Hochdruckwelle 1 angetriebenen Generator eine ausreichend große Energiemenge für das Flugzeug zur Verfügung gestellt werden.

Unter bestimmten Betriebsbedingungen, nämlich wenn sich das Flugzeug am Boden oder in der Landephase befindet und die Hochdruckwelle nur mit verminderter Drehzahl angetrieben wird, reicht die Drehzahl der Hochdruckwelle 1 zur Gewährleistung einer ausreichend großen Leistungsentnahme nicht aus. Eine Erhöhung der Drehzahl der Hochdruckwelle 1 wäre mit einem unnötig hohen Kraftverbrauch verbunden. Um auch in dieser Phase genügend elektrische Energie zur Verfügung stellen zu können und auch den ordnungsgemäßen Betrieb der mit dem Zubehörgetriebe 5 verbundenen Pumpen zu gewährleisten, wird die in ausreichender Höhe zur Verfügung stehende Energie der - jedoch mit unterschiedlicher Drehzahl rotierenden - Niederdruckwelle 7 des Zwei-Wellen-Triebwerks mit der nachfolgend beschriebenen Anordnung auf das Hochdruckwellengetriebe 3 übertragen.

Die Niederdruckwelle 7 ist über ein Niederdruckwellengetriebe 8 und eine in dieser Phase im Eingriff befindliche zweite schaltbare Kupplung 9 sowie ein Kegelscheibenumschlingungsgetriebe 10 (Geschwindigkeitsausgleichsgetriebe) und eine Freilaufkupplung 11 mit dem Hochdruckwellengetriebe 3 verbunden, um so in einer Phase mit geringer Drehzahl der Hochdruckwelle die Energie der Niederdruckwelle 7 auf die Hochdruckwelle 1 zu übertragen und für die Energieentnahme am Generators und für den Antrieb weiteren Zubehörs zu nutzen. Das Niederdruckwellengetriebe 8 dient der Erhöhung der Drehzahl auf einen Betrag, bei dem innerhalb der Betriebsgrenzen des Kegelscheibenumschlingungsgetriebes 10 eine maximale Energieentnahme möglich ist. Der Unterschied zwischen den Drehgeschwindigkeiten der Hochdruckwelle 1 und der Niederdruckwelle 7 wird durch das Einstellen des Kegelscheibenumschlingungsgetriebes 10 auf der Grundlage eines diesem nachgeschalteten Drehmomentsensor 12 bzw. eines Geschwindigkeitseingabesignals von Hoch- und Niederdruckwelle ausgeglichen.

Das Kegelscheibenumschlingungsgetriebe 10 ist ein stufenloses Getriebe, bestehend aus zwei über ein flexibles Umschlingungsmittel 13 (Kraftübertragungsmittel) verbundenen Kegelscheibenpaaren 14, 15 mit jeweils in veränderlichem Abstand angeordneten Kegelscheiben. Den beiden Kegelscheibenpaaren 14, 15 ist jeweils ein mit einem Druckmittel betriebenes Stellorgan 16, 17 zugeordnet. In Abhängigkeit von dem mit dem Drehmomentsensor 12 ermittelten Drehmoment wird durch Verstellen des Abstands zwischen den Kegelscheiben des jeweiligen Kegelscheibenpaars 14, 15 mit Hilfe des die Kraftübertragung aufgrund des Drehmomentsignals steuernden und begrenzenden Stellorgans 16, 17 der Anpressdruck auf das Umschlingungsmittel 13 erhöht bzw. verringert, um so einen Geschwindigkeitsausgleich zwischen Hoch- und Niederdruckwellengetriebe zu bewirken und über das Hochdruckwellengetriebe 3 eine stufenlose Kraftübertragung von der mit wechselnder Geschwindigkeit drehenden Niederdruckwelle 7 auf die Hochdruckwelle 1 bzw. das Hochdruckwellengetriebe 3 zu erreichen und damit bei einer für die Leistungsentnahme zu geringen Drehzahl der Hochdruckwelle 1 die Energie der Niederdruckwelle zur Energieerzeugung mit zu nutzen.

Das Hochdruckwellengetriebe 3 dient der Anpassung der Ausgabegeschwindigkeit des Kegelscheibenumschlingungsgetriebes 10 an die Geschwindigkeit der Hochdruckwelle 1 und zur Energieübertragung auf das Zubehörgetriebe 5 über die Radialwelle 4. Die Steuerung der Stellorgane 14, 15 des Kegelscheibenumschlingungsgetriebes 10 erfolgt über eine mit dem Drehmomentsensor 12 verbundene Triebwerkssteuereinheit (nicht dargestellt), die den hydraulischen Druck zu den hydraulisch betriebenen Stellorganen 14, 15 regelt. Die zwischen dem Kegelscheibenumschlingungsgetriebe 10 und dem Hochdruckwellengetriebe 3 angeordnete Freilaufkupplung 11 stellt sicher, dass Energie nur von der Niederdruckwelle auf die Hochdruckwelle übertragen wird und nicht umgekehrt. Wenn die zweite schaltbare Kupplung 9 während bestimmter Flugphasen nicht im Eingriff ist, verhindert die Freilaufkupplung 11, dass das Kegelscheibenumschlingungsgetriebe 10 angetrieben wird und somit der Verschleiß an den Bauteilen des Kegelscheibenumschlingungsgetriebes gesenkt werden kann.

Die oben erwähnte erste zuschaltbare Kupplung verbindet im Betrieb des Triebwerks die Hochdruckwelle 1 mit dem Hochdruckwellengetriebe 3. Bei einem Ausfall des Triebwerks während des Fluges wird die Hochdruckwelle 1 durch diese Kupplung 2 vom Hochdruckwellengetriebe 3 getrennt, so dass die mit dem Fan (nicht dargestellt) verbundene Niederdruckwelle 7 unabhängig von der Hochdruckwelle 1 und somit mit höherer Geschwindigkeit angetrieben werden kann und der Luftwiderstand am Flugzeug verringert wird. Über die im Eingriff befindliche zuschaltbare zweite Kupplung 8 wird die bei Triebwerksausfall durch Windmilling erzeugte Energie der Niederdruckwelle 7 über das von der Hochdruckwelle 1 abgekoppelte Hochdruckwellengetriebe 3 auf das in der Geschwindigkeit von dem Kegelscheibenumschlingungsgetriebe 10 gesteuerte Zubehörgetriebe 5 übertragen, so dass weiterhin elektrische und hydraulische Energie an den mit dem Zubehörgetriebe 5 verbundenen Vorrichtungen 6 erzeugt werden kann.

### Bezugszeichenliste

- 1: Hochdruckwelle
- 2: erste schaltbare Kupplung
- 3: Hochdruckwellengetriebe
- 4: Radialwelle (Zubehörgetriebeantriebswelle)
- 5: Zubehörgetriebe
- 6: Zusatzgeräte/Zubehör (Generator, Pumpen)
- 7: Niederdruckwelle
- 8: Niederdruckwellengetriebe
- 9: zweite schaltbare Kupplung
- 10: Kegelscheibenumschlingungsgetriebe (Geschwindigkeitsausgleichsgetriebe)
- 11: Freilaufkupplung
- 12: Drehmomentsensor
- 13: Umschlingungsmittel
- 14: Kegelscheibenpaar
- 15: Kegelscheibenpaar
- 16: Stellorgan
- 17: Stellorgan

## Patentansprüche

1. Anordnung zur Energieentnahme für ein Zwei-Wellen-Triebwerk mit einer Niederdruckwelle (7), einer über ein Zubehörgetriebe (5) mit einem Generator verbundenen Hochdruckwelle (1), einem zwischen der Hochdruckwelle (1) und dem Zubehörgetriebe (5) angeordneten Hochdruckwellengetriebe (3) und einem an die Niederdruckwelle (7) angeschlossenen Niederdruckwellengetriebe (8), **dadurch gekennzeichnet, dass** das zur Energieübertragung auf das Hochdruckwellengetriebe (3) vorgesehene Niederdruckwellengetriebe (8) über eine in bestimmten Betriebsphasen mit verminderter Hochdruckwellendrehzahl zuschaltbare Kupplung (9) und ein zur Geschwindigkeitsanpassung und Einstellung der Kraftübertragung zwischen Hoch- und Niederdruckwellengetriebe (3, 8) ausgebildetes Kegelscheibenumschlingungsgetriebe (10) sowie eine Freilaufkupplung (11) mit dem Hochdruckwellengetriebe (3) verbunden ist.

2. Anordnung nach Anspruch 1, **dadurch gekennzeichnet, dass** das Niederdruckwellengetriebe (8) zur Erzielung einer im Arbeitsbereich des Kegelscheibenumschlingungsgetriebes (10) liegenden erhöhten Ausgangsgeschwindigkeit mit maximaler Energieabgabe ausgelegt ist und das Hochdruckwellengetriebe (3) zur an den Arbeitsbereich des Kegelscheibenumschlingungsgetriebes (10) angepassten Geschwindigkeitsreduzierung ausgebildet ist.

3. Anordnung nach Anspruch 1, **dadurch gekennzeichnet, dass** das Kegelscheibenumschlingungsgetriebe (10) zwei durch ein Umschlingungsmittel (13) verbundene Kegelscheibenpaare (14, 15) umfasst, deren Kegelscheibenabstand, wenn die zweite schaltbare Kupplung (9) im Eingriff ist, mittels Stellorganen (16, 17) in Abhängigkeit von der Geschwindigkeit der Hoch- und der Niederdruckwelle (1,7) zur Geschwindigkeitsanpassung einstellbar ist.

4. Anordnung nach Anspruch 3, **dadurch gekennzeichnet, dass** dem Kegelscheibenumschlingungsgetriebe (10) zu dessen Einstellung auf der Basis eines gemessenen Drehmoments ein mit einer elektronischen Triebwerksteuerung verbundener Drehmomentsensor (12) nachgeschaltet ist.

5. Anordnung nach Anspruch 3, **dadurch gekennzeichnet, dass** die Einstellung des Kegelecheibenumechlingungsgetriebes (10) auf der Basis einer Drehzahlmessung der Hochdruckwelle (1) und der Niederdruckwelle (7) erfolgt.

6. Anordnung nach Anspruch 1, **gekennzeichnet durch** eine zwischen Hochdruckwelle (1) und Hochdruckwellengetriebe (3) vorgesehene erste schaltbare Kupplung (2), die bei einem Triebwerksausfall nicht im Eingriff ist und bei im Eingriff befindlicher zweiter schaltbarer Kupplung (9) die Hochdruckwelle (1) vom Hochdruckwellengetriebe (3) trennt.

## Claims

1. Arrangement for energy extraction for a two-shaft engine having a low-pressure shaft (7), a high-pressure shaft (1) connected via an accessory gearbox (5) to a generator, a high-pressure shaft transmission (3) arranged between the high-pressure shaft (1) and the accessory gearbox (5), and a low-pressure shaft transmission (8) connected to the low-pressure shaft (7), **characterized in that** the low-pressure shaft transmission (8) provided for energy transmission to the high-pressure shaft transmission (3) is connected to the high-pressure shaft transmission (3) via a clutch (9) engageable in certain operating phases with reduced high-pressure shaft speed, a belt-driven conical pulley transmission (10) designed for speed adjustment and for setting the power transmission between the high and low-pressure shaft transmissions (3, 8), and a free-wheel clutch (11).

2. Arrangement in accordance with Claim 1, **characterized in that** the low-pressure shaft transmission (8) is designed for achieving an increased output speed within the working range of the belt-driven conical pulley transmission (10) with maximum energy output, and the high-pressure shaft transmission (3) is designed for a speed reduction adjusted to the working range of the belt-driven conical pulley transmission (10).

3. Arrangement in accordance with Claim 1, **characterized in that** the belt-driven conical pulley transmission (10) includes two conical pulley pairs (14, 15) connected by a belt means (13) and whose conical pulley spacing when the second shiftable clutch (9) is engaged is adjustable in order to adjust the speed by means of setting elements (16, 17), depending on the speeds of the high-pressure and low-pressure shafts (1,7).

4. Arrangement in accordance with Claim 3, **characterized in that** a torque sensor (12) coupled to an electronic engine control is connected behind the belt-driven conical pulley transmission (10) in order to adjust the latter on the basis of a measured torque.

5. Arrangement in accordance with Claim 3, **characterized in that** the setting of the belt-driven conical pulley transmission (10) is performed on the basis of a speed measurement of the high-pressure shaft (1) and the low-pressure shaft (7).

6. Arrangement in accordance with Claim 1, **characterized by** a first shiftable clutch (2) provided between the high-pressure shaft (1) and the high-pressure shaft transmission (3), said clutch being disengaged in the event of an engine failure and separating the high-pressure shaft (1) from the high-pressure shaft transmission (3) when the second shiftable clutch (9) is engaged.

## Revendications

1. Système destiné à prélever de l'énergie pour un moteur à deux arbres comprenant un arbre basse pression (7), un arbre haute pression (1) relié à un générateur par l'intermédiaire d'une transmission accessoire (5), une transmission d'arbre haute pression (3) placée entre l'arbre haute pression (1) et la transmission accessoire (5), et une transmission d'arbre basse pression (8) raccordée à l'arbre basse pression (7), **caractérisé en ce que** la transmission d'arbre basse pression (8) prévue pour transmettre l'énergie à la transmission d'arbre haute pression (3) est reliée à la transmission d'arbre haute pression (3) par l'intermédiaire d'un accouplement (9) activable dans certaines phases de fonctionnement avec régime réduit de l'arbre haute pression, et d'une transmission à variation continue à poulies coniques (10) conçue pour adapter la vitesse et régler la transmission d'énergie entre les transmissions d'arbre haute pression et d'arbre basse pression (3, 8), ainsi que d'un accouplement à roue libre (11).

2. Système selon la revendication n° 1, **caractérisé en ce que** la transmission d'arbre basse pression (8) est dimensionnée pour fournir un maximum d'énergie afin d'atteindre une vitesse de sortie accrue située dans la plage de travail de la transmission à variation continue à poulies coniques (10), et que la transmission d'arbre haute pression (3) est conçue pour permettre une réduction de vitesse adaptée à la plage de travail de la transmission à variation continue à poulies coniques (10).

3. Système selon la revendication n° 1, **caractérisé en ce que** la transmission à variation continue à poulies coniques (10) comprend deux paires de poulies coniques (14, 15) reliées par un moyen en boucle (13), dont la distance entre elles, lorsque le second accouplement activable (9) est en prise, peut être réglée par des actionneurs (16, 17) pour adapter la vitesse en fonction de la vitesse de l'arbre haute pression et de l'arbre basse pression (1, 7).

4. Système selon la revendication n° 3, **caractérisé en ce qu'**un capteur de couple (12) relié à une commande électronique du moteur est placé en aval de la transmission à variation continue à poulies coniques (10) afin de l'ajuster sur la base d'un couple mesuré.

5. Système selon la revendication n° 3, **caractérisé en ce que** l'ajustage de la transmission à variation continue à poulies coniques (10) est effectué sur la base d'une mesure de couple de l'arbre haute pression (1) et de l'arbre basse pression (7).

6. Système selon la revendication n° 1, **caractérisé par** un premier accouplement activable (2) prévu entre l'arbre haute pression (1) et la transmission d'arbre haute pression (3), qui n'est pas en prise en cas de défaillance du moteur et qui, lorsque le second accouplement activable (9) est en prise, désolidarise l'arbre haute pression (1) de la transmission d'arbre haute pression (3).
